(19) Europäisches Patentamt
European Patent Office
Office européen des brevets

(11) EP 2 750 881 B1

(12) **EUROPEAN PATENT SPECIFICATION**

(45) Date of publication and mention of the grant of the patent:
**03.06.2020 Bulletin 2020/23**

(21) Application number: **12769558.3**

(22) Date of filing: **19.09.2012**

(51) Int Cl.:
***B32B 7/12*** *(2006.01)* ***B32B 27/18*** *(2006.01)*

(86) International application number:
**PCT/US2012/055976**

(87) International publication number:
**WO 2013/043635 (28.03.2013 Gazette 2013/13)**

(54) **LAYERED STRUCTURES AND ARTICLES PREPARED THEREFROM**

SCHICHTSTRUKTUREN UND DARAUS HERGESTELLTE ARTIKEL

STRUCTURES STRATIFIEES ET ARTICLES PREPARES A PARTIR DE CELLES-CI

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **19.09.2011 US 201161536140 P**

(43) Date of publication of application:
**09.07.2014 Bulletin 2014/28**

(73) Proprietors:
- **Dow Global Technologies LLC**
  **Midland, MI 48674 (US)**
- **Rohm and Haas Company**
  **Philadelphia, PA 19106 (US)**

(72) Inventors:
- **SUNDARAM, Sekhar**
  **Merion Station, PA 19066 (US)**
- **BHATTACHARJEE, Debkumar**
  **Blue Bell, PA 19422 (US)**
- **VAN DUN, Jozef J.**
  **CH-8810 Horgen (CH)**
- **JACOBS, Bradley A.**
  **Crystal Lake, IL 60012 (US)**
- **PATEL, Rajen M.**
  **Lake Jackson, TX 77566 (US)**
- **WILLIAMSON, Alexander**
  **Rosharon, TX 77583 (US)**

(74) Representative: **Boult Wade Tennant LLP**
**Salisbury Square House**
**8 Salisbury Square**
**London EC4Y 8AP (GB)**

(56) References cited:
**EP-A2- 0 336 780**
**JP-A- 2011 016 232**
**US-A- 6 074 755**
**US-A1- 2004 214 952**
**US-A1- 2010 010 156**
**US-A1- 2010 136 347**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 750 881 B1

## Description

BACKGROUND OF THE INVENTION

In "two-component" curable polyurethane adhesives, one component is an "isocyanate group containing component," and the other component is a component that contains one or more compounds with plural active hydrogens. The "two-component adhesive" is prepared by mixing the two components together, and the mixture is then applied to two or more substrates.

Some "two-component" adhesive formulations contain one or more monomeric, aromatic isocyanate compounds, which are usually di-functional, and one or more polyols. Such formulations are capable of undergoing chemical reactions that form urethane polymers, and these reactions are typically useful curing reactions. The monomeric aromatic isocyanates react to form polymers and/or crosslinks that strengthen the adhesive bond. These polyurethane adhesives are sometimes used to hold together two or more substrates to form a bonded assembly for use in food containers. JP2010-264677 discloses a laminate that has an adhesive layer and a sealant layer sequentially provided on a plastic base material. The adhesive layer contains an isocyanate compound (85 wt% or more) having two or more isocyanate groups and a polydimethylsiloxane compound (0.01-0.5 wt%). The laminate is used for material for packaging foodstuffs and pharmaceuticals. Films, laminates and/or compositions are also disclosed in the following references: JP2006021530A, WO 2008/079784, WO 2008/080111 and US 2010/0093942.

Additional films, laminates and/or compositions are disclosed in the following references: JP2002316396A, JP03918404B2, JP2001152127A, JP04496564B2, JP04407144B2, JP03959967B2 (Abstract), JP03918404B2, JP2000167973A, JP2009142997A, JP03780741B2, JP11000978A, JP3086539A, JP2011016232A, JP2010036413A, JP2006021530A, JP04402414B2, US20040116643, US20020103284, US20100010156, US7101624, US7097890, US7241481, US7368171, US7071280, US6607831, US5654061, US5047272, WO 02/16221, WO 97/03821 and EP1559746A1.

However, for food packaging applications, even though the polyurethane adhesive is cured, some monomeric isocyanate compounds may be present in the bonded assembly. The presence of monomeric isocyanate compounds is considered to be undesirable, since these compounds are considered to be both toxic and reactive. Also, these compounds are capable of reacting with water to form amines. For example, excess monomeric isocyanate may react with water (for example, trapped water formed during the coating of the adhesive, or water from an atmosphere under high humidity) to form a primary amine (see Figure 1). Such amines are considered to be undesirable. Among such amines, primary aromatic amines (PAAs) are considered especially undesirable. For food containers, it is desired that contact between the container and the food does not result in appreciable amounts of PAAs in the food.

Whether a bonded assembly contributes to the presence of PAAs in food is generally tested by exposing the bonded assembly to dilute acetic acid for a certain test period. The dilute acetic acid acts as a "simulant" (that is, it simulates the action of food). During the test period, PAAs present in the bonded assembly may migrate into the simulant. Also during that time, monomeric aromatic isocyanate compounds in the material, under test, may also migrate into the simulant, and react with the simulant to form a PAA. Subsequently, the simulant may be analyzed for the total concentration of all PAAs. That concentration is herein called the "PAA level."

It is desirable that a bonded assembly has low PAA level. In the past, it was common for a bonded assembly, made using a "two-component" polyurethane adhesive, to have an appreciable amount of monomeric, aromatic isocyanate present, even after the formation of the bonded assembly and the curing reaction of the adhesive were considered complete. Such a bonded assembly typically had a high PAA level.

In the past, one approach to providing a bonded assembly with a low PAA level was to store the manufactured assembly for a period of time, prior to the use of the bonded assembly in a food packaging application. The concentration of monomeric isocyanate will normally decline while the bonded assembly is in storage. It is thought that water in the atmosphere diffuses into the adhesive and reacts with isocyanate groups. These reactions result in formation of PAA which may further react with other "isocyanate group-containing molecules" to form relatively innocuous urea-type compounds. Therefore, as the isocyanate groups react with water, the amount of monomeric aromatic isocyanate decreases, and the PAA level also decreases. In the past, storage times of 14 days or more have often been required, before the PAA level became acceptably low. There is a need amongst manufacturers of food packaging to reduce the level of PAA to acceptably low levels, within a short period of time, to eliminate long storage times. Thus, there is a need for new forms of food packaging that will effectively scavenge such PAAs. These needs and others have been met by the following invention.

SUMMARY OF THE INVENTION

The invention provides an article comprising a layered structure comprising at least two layers:

A) a first layer A formed from a composition A comprising a polyurethane;
B) a second layer B formed from a composition B comprising at least one compound selected from the group consisting of the following compounds:

a) a compound 1 comprising at least one acid group,
b) a compound 2 comprising at least one anhydride group,
c) a compound 3 comprising at least one primary amine group and/or at least one secondary amine group, and
d) a combination thereof; and

wherein the compound has a molecular weight or number average molecular weight, each less than 10,000 g/mole and wherein the article further comprises a perishable material.

BRIEF DESCRIPTION OF THE FIGURE

Figure 1 depicts a schematic of a layered structure, in which one layer contains MDI (methylene diphenyl diisocyanate), which can migrate through the layered structure or hydrolyze, to form methylene diphenyl diamine, which is a primary aromatic amine, which can also migrate through the layered structure.
Figure 2 is a schematic depicting a laminate formed, in part, from an experimental three layer film.
Figure 3 is a schematic depicting the formation of a pouch from a laminate.
Figure 4 is another schematic depicting the formation of a pouch from a laminate, which was formed, in part, from an experimental three layer film.

DETAILED DESCRIPTION OF THE INVENTION

As discussed above, the invention provides an article comprising a layered structure comprising at least two layers:

A) a first layer A formed from a composition A comprising a polyurethane;
B) a second layer B formed from a composition B comprising at least one compound selected from the group consisting of the following compounds:

a) a compound 1 comprising at least one acid group,
b) a compound 2 comprising at least one anhydride group,
c) a compound 3 comprising at least one primary amine group and/or at least one secondary amine group, and
d) a combination thereof; and

wherein the compound has a molecular weight or number average molecular weight, each less than 10,000 g/mole and wherein the article further comprises a perishable material.
The layered structure may comprise a combination of two or more embodiments as described herein.
In one embodiment, composition B comprising at least one compound selected from the group consisting of the following compounds:

a) a compound 1 containing at least one acid group,
b) a compound 2 containing at least one anhydride group,

or combinations thereof.
In one embodiment, composition B comprising at least one compound selected from the group consisting of the following compounds:

a) a compound 1 containing at least one acid group.

In one embodiment, composition B comprising at least one compound selected from the group consisting of the following compounds:
b) a compound 2 containing at least one anhydride group.
In one embodiment, composition B comprising at least one compound selected from the group consisting of the following compounds:

c) a compound 3 containing at least one primary amine group and/or at least one secondary amine group.

In one embodiment, composition B comprising at least one compound selected from the group consisting of the following compounds:

c) a compound 3 containing at least one primary amine group.

In one embodiment, composition B comprising at least one compound selected from the group consisting of the following compounds:

c) a compound 3 containing at least one secondary amine group.

In one embodiment, composition B comprising from 1 to 30 weight percent of the compound, based on the weight of composition B.

In one embodiment, composition B comprising from 1 to 20 weight percent of the compound, based on the weight of composition B.

In one embodiment, composition B comprising from 1 to 10 weight percent of the compound, based on the weight of composition B.

In one embodiment, the amount of compound, in second layer B, is from 1 to 10 weight percent, based on the weight of the second layer B.

In one embodiment, the compound has a molecular weight or number average molecular weight less than 5,000 g/mole, or less than 2,000 g/mole, or less than 1000 g/mole, or less than 500 g/mole.

In one embodiment, the compound has a molecular weight or number average molecular weight from 300 to 10,000 g/mole, further from 300 to 5,000 g/mole, further from 300 to 4,000 g/mole, further from 300 to 3,500 g/mole.

In one embodiment, the compound has a molecular weight or number average molecular weight from 400 to 10,000 g/mole, further from 400 to 5,000 g/mole, further from 400 to 4,000 g/mole, further from 400 to 3,500 g/mole.

In one embodiment, the compound has a molecular weight from 300 to 10,000 g/mole, further from 300 to 5,000 g/mole, further from 300 to 4,000 g/mole, further from 300 to 3,500 g/mole.

In one embodiment, the compound has a number average molecular weight from 400 to 10,000 g/mole, further from 400 to 5,000 g/mole, further from 400 to 4,000 g/mole, further from 400 to 3,500 g/mole.

In one embodiment, the compound has a number average molecular weight from 500 to 10,000 g/mole, further from 700 to 5,000 g/mole, further from 1000 to 4,000 g/mole, further from 1200 to 3,500 g/mole. In a further embodiment, the compound is a MAH-grafted propylene-based polymer and/or a MAH-grafted ethylene-based polymer. In a further embodiment, the compound is a MAH-grafted ethylene-based polymer. In another embodiment, the compound is a MAH-grafted propylene-based polymer.

In one embodiment, the compound has a number average molecular weight from 500 to 10,000 g/mole, further from 700 to 5,000 g/mole, further from 1000 to 4,000 g/mole, further from 1200 to 3,500 g/mole. In a further embodiment, the compound is an amine functional propylene-based polymer and/or an amine functional ethylene-based polymer. In a further embodiment, the compound is an amine functional ethylene-based polymer. In another embodiment, the compound is an amine functional propylene-based polymer.

In one embodiment, the compound comprises less than, or equal to, 7.0 moles/kg of the functional moiety, based on the weight of the compound.

In one embodiment, the compound comprises less than, or equal to, 5.0 moles/kg of the functional moiety, based on the weight of the compound.

In one embodiment, the compound comprises less than, or equal to, 3.0 moles/kg of the functional moiety, based on the weight of the compound.

In one embodiment, the compound comprises less than, or equal to, 2.0 moles/kg of the functional moiety, based on the weight of the compound.

In one embodiment, the compound comprises at least one group selected from $-CO_2H$, $-SO_3H$, $-PO_3H_2$, aromatic hydroxyl, or a combination thereof.

In one embodiment, the compound comprises an acid group.

In one embodiment, the compound comprises an anhydride group.

In one embodiment, the compound comprises a primary amine, a secondary amine group, or a combination thereof.

In one embodiment, the compound is selected from difunctional primary amines.

A compound may comprise a combination of two or more embodiments as described herein.

In one embodiment, composition B further comprises an olefin-based polymer B.

In one embodiment, the olefin-based polymer B is present in an amount from 1 to 50 weight percent, based on the weight of composition B.

In one embodiment, the olefin-based polymer B is present in an amount from 1 to 30 weight percent, further from 1 to 20 weight percent, further from 1 to 10 weight percent, based on the weight of composition B.

In one embodiment, the olefin-based polymer B is present in an amount from 5 to 30 weight percent, further from 5 to 20 weight percent, further from 5 to 10 weight percent, based on the weight of composition B.

In one embodiment, the olefin-based polymer B has a melt index (12) less than, or equal to, 15 g/10 min, further less than, or equal to, 10 g/10 min in, further less than, or equal to, 5 g/10 min. In a further embodiment, the olefin-based polymer B is an ethylene-based polymer, further an ethylene/a-olefin interpolymer, and further an ethylene/a-olefin copolymer. Examples of α-olefins are discussed herein. Such lower melt indexes are preferred for good film formation.

In one embodiment, the olefin-based polymer B has a melt index (12) greater than, or equal to, 0.1 g/10 min, further greater than, or equal to, 0.2 g/10 min in, further greater than, or equal to, 0.5 g/10 min. In a further embodiment, the olefin-based polymer B is an ethylene-based polymer, further an ethylene/a-olefin interpolymer, and further an ethylene/a-olefin copolymer. Examples of α-olefins are discussed herein.

In one embodiment, the olefin-based polymer B has a melt flow rate (MFR) less than, or equal to, 15 g/10 min, further less than, or equal to, 10 g/10 min in, further less than, or equal to, 5 g/10 min. In a further embodiment, the olefin-based polymer B is a propylene-based polymer. Such lower melt flow rates are preferred for good film formation.

In one embodiment, the olefin-based polymer B has a melt flow rate (MFR) greater than, or equal to, 0.1 g/10 min, further greater than, or equal to, 0.2 g/10 min in, further greater than, or equal to, 0.5 g/10 min. In a further embodiment, the olefin-based polymer B is a propylene-based polymer.

The olefin-based polymer B may comprise a combination of two or more embodiments as described herein.

In one embodiment, the olefin-based polymer B is an ethylene-based polymer B. In a further embodiment, the ethylene-based polymer B is an ethylene/a-olefin interpolymer, and further an ethylene/a-olefin copolymer.

The α-olefins include C3-C10 α-olefin(s). Illustrative α-olefins include propylene, 1-butene, 1-pentene, 1-hexene, 4-methyl-1-pentene, 1-heptene, 1-octene, 1-nonene and 1-decene. Preferably, the α-olefin is propylene, 1-butene, 1-hexene or 1-octene. Preferred copolymers include ethylene/propylene (EP) copolymers, ethylene/butene (EB) copolymers, ethylene/hexene (EH) copolymers, ethylene/octene (EO) copolymers.

Commercial examples of suitable ethylene/a-olefin copolymers include, but are not limited to, AFFINITY Polyolefin Plastomers, ENGAGE Polyolefin Elastomers and DOWLEX Polyethylene Resins, all available from The Dow Chemical Company; EXCEED and EXACT polymers available from ExxonMobil Chemical Company; and TAFMER polymers available from the Mitsui Chemical Company.

In one embodiment, the ethylene-based polymer B is present in an amount from 60 to 90, or from 70 to 85 weight percent, based on the weight of composition B. In a further embodiment, the ethylene-based polymer B is an ethylene/a-olefin interpolymer, and further an ethylene/a-olefin copolymer. Examples of α-olefins are discussed above.

In one embodiment, the ethylene-based polymer B has a melt index (12) from 0.1 to 15 g/10 min, or from 0.2 to 5 g/10 min, or from 0.5 to 3 g/10 min. In a further embodiment, the ethylene-based polymer B is an ethylene/a-olefin interpolymer, and further an ethylene/a-olefin copolymer. Examples of α-olefins are discussed above.

In one embodiment, the ethylene-based polymer B has a density from 0.870 to 0.950 g/cc, or from 0.880 to 0.940 g/cc, or from 0.890 to 0.930 g/cc. In a further embodiment, the ethylene-based polymer B is an ethylene/a-olefin interpolymer, and further an ethylene/α-olefin copolymer. Examples of α-olefins are discussed above.

In one embodiment, the ethylene-based polymer B is a heterogeneously branched ethylene/a-olefin interpolymer, and further a heterogeneously branched ethylene/a-olefin copolymer. Examples of α-olefins are discussed above.

The ethylene-based polymer B may comprise a combination of two or more embodiments as described herein.

An ethylene/a-olefin interpolymer B may comprise a combination of two or more embodiments as described herein.

An ethylene/a-olefin copolymer B may comprise a combination of two or more embodiments as described herein.

In one embodiment, the olefin-based polymer B is a propylene-based polymer B.

In one embodiment, the propylene-based polymer B has a melt flow rate (MFR) from 0.1 to 10 g/10 min, or from 0.2 to 5 g/10 min, or from 0.3 to 3 g/10 min.

In one embodiment, the propylene-based polymer B has a density from 0.860 to 0.930 g/cc, or from 0.870 to 0.920 g/cc, or from 0.880 to 0.910 g/cc.

Commercial examples of suitable propylene-based polymers include INSPIRE Performance Polymers available from The Dow Chemical Company.

The propylene-based polymer B may comprise a combination of two or more embodiments as described herein.

In one embodiment, composition B further comprises a LDPE. In a further embodiment, composition B comprises an ethylene-based polymer B, and preferably an ethylene/a-olefin interpolymer, and more preferably an ethylene/a-olefin copolymer. Suitable α-olefins are discussed above.

In one embodiment, the LDPE is present in an amount from 10 to 30 weight percent, based on the weight of composition B.

In one embodiment, the LDPE has a density from 0.91 to 0.94 g/cc, or from 0.92 to 0.93 g/cc; and a melt index (12) from 0.1 to 5, or from 0.2 to 2, or from 0.5 to 1 g/10 min.

In one embodiment, composition B comprises the ethylene-based polymer B and the LDPE, and the weight ratio of ethylene-based polymer to the LDPE is from 1 to 5, or from 1.2 to 4, or from 1.5 to 3. In a further embodiment, the ethylene-based polymer B is an ethylene/a-olefin interpolymer, and further an ethylene/a-olefin copolymer. Suitable

α-olefins are discussed above.

The LDPE may comprise a combination of two or more embodiments as described herein.

In one embodiment, Composition B comprises from 1 to 10 weight percent of compound B, based on the weight of composition B, an ethylene/alpha-olefin copolymer, and a LDPE. In a further embodiment, the ethylene/alpha-olefin copolymer is present in an amount greater than 50 weight percent, further greater than 60 weight percent, based on the weight of the composition B. Suitable alpha-olefins are discussed above. In a further embodiment, the LDPE is present in an amount less than 50 weight percent, further less than 40 weight percent, based on the weight of composition B.

Composition B may comprise a combination of two or more embodiments as described herein.

Layer B may comprise a combination of two or more embodiments as described herein.

In one embodiment, the polyurethane of composition A is formed from at least one "isocyanate-containing compound," and at least one "hydroxyl group containing compound," where at least one "isocyanate group containing compound" has a molecular weight of less than, or equal to, 500 g/mole. In a further embodiment, the "isocyanate-containing compound" is an aromatic isocyanate.

In one embodiment, the initial molar ratio of isocyanate groups to hydroxyl groups is greater than 1.0.

In one embodiment, composition A comprises greater than, or equal to, 80 weight percent, or greater than, or equal to, 90 weight percent, or greater than, or equal to, 95 weight percent, of the polyurethane, based on the weight of composition A.

The polyurethane of composition A may comprise a combination of two or more embodiments as described herein.

Composition A may comprise a combination of two or more embodiments as described herein.

Layer A may comprise a combination of two or more embodiments as described herein.

In one embodiment, Layer B has a thickness from 5 to 50 μm (microns).

In one embodiment, Layer A is an exterior layer.

In one embodiment, Layer A is an interior layer.

In one embodiment, the sum thickness of Layer A and Layer B is greater than, or equal to, 40 percent of the total thickness of the layered structure.

In one embodiment, the thickness of Layer B is greater than, or equal to, 20 percent of the total thickness of the layered structure.

In one embodiment, the layered structure further comprises a third Layer C formed from a composition C, comprising a functionalized olefin-based polymer C, comprising at least one polymerized monomeric unit, or at least one reacted functionalization agent, each comprising a functional group selected from the group consisting of the following: an acid group, an anhydride group, a primary amine group, a secondary amine group, a hydroxyl group, and combinations thereof.

In one embodiment, the functional group of the functionalized olefin-based polymer C is selected from the group consisting of the following: COOH primary or secondary amine, aromatic OH, $SO_3H$, anhydride, and combinations thereof.

In one embodiment, functionalized olefin-based polymer C of composition C is a functionalized ethylene-based polymer C.

In one embodiment, the functionalized ethylene-based polymer C has a melt index (12) from 0.1 to 50 g/10 min, or from 0.1 to 30 g/10min, or from 0.1 to 15 g/10 min, or from 0.1 to 5 g/10min.

In one embodiment, the functionalized ethylene-based polymer C has a density from 0.88 to 0.94 g/cc, or from 0.89 to 0.93 g/cc.

The functionalized olefin-based polymer C may comprise a combination of two or more embodiments as described herein.

The functionalized ethylene-based polymer C may comprise a combination of two or more embodiments as described herein.

Composition C may comprise a combination of two or more embodiments as described herein.

Layer C may comprise a combination of two or more embodiments as described herein.

In one embodiment, the sum thickness of Layer B and Layer C is greater than, or equal to, 70 percent of the total thickness of the layered structure.

In one embodiment, second layer B is adjacent to the perishable material.

In one embodiment, the second layer B is adjacent to first layer A.

In one embodiment, the second layer B is adjacent to another layer, which is adjacent to the perishable material.

In one embodiment, Layer A is located between two film layers.

In one embodiment, the perishable material is selected from food products or pharmaceutical products.

In one embodiment, the article is a laminate.

In one embodiment, the layered structure further comprises a polyester, aluminum, or a combination thereof.

The layered structure may comprise a combination of two or more embodiments as described herein.

A layer within the layered structure (for example, Layer A, Layer B, or Layer C) may comprise a combination

of two or more embodiments as described herein.

Layer A may comprise a combination of two or more embodiments as described herein.

Layer B may comprise a combination of two or more embodiments as described herein.

Layer C may comprise a combination of two or more embodiments as described herein.

Composition A may comprise a combination of two or more embodiments as described herein.

Composition B may comprise a combination of two or more embodiments as described herein.

Composition C may comprise a combination of two or more embodiments as described herein.

An inventive article may comprise a combination of two or more embodiments as described herein.

**Functionalized Compounds (Compounds of Composition B)**

Compounds of composition B include at least one compound selected from the group consisting of the following compounds:

a) a compound 1 comprising at least one acid group,
b) a compound 2 comprising at least one anhydride group,
c) a compound 3 comprising at least one primary amine group and/or at least one secondary amine group,
d) a combination thereof; and

Compound 1 (comprising at least one acid group) includes, but is not limited to, the following compounds: copolymers of (meth)acrylic acid and alkyl(meth)acrylates, and copolymers of (meth)acrylic acid and alpha-olefins, such as ethylene or propylene.
Compound 2 (comprising at least one anhydride group) includes, but is not limited to, the following compounds: (co)polymers of alpha-olefins grafted with maleic anhydride, and (co)polymers of maleic anhydride and alpha-olefins.
Compound 3 (comprising at least one amine group) includes, but is not limited to, the following compounds: amine-terminated (co)polymers of ethylene, propylene or ethylene oxide, or propylene oxide, such as ELASTAMINES (Huntsman).

In one embodiment, the compound is shown in Structure I below:

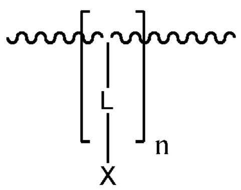 (I),

where the wavy line is a polymer chain, which may or may not be branched; L is a linking group, and X is a functional group selected from an acid group, an anhydride group or an amine group.
In one embodiment, the compound is shown in Structure II below:

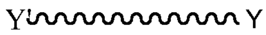 (II),

where the wavy line is a polymer chain, which may or may not be branched; and Y and Y' are each independently groups selected from a hydrogen, an acid group, an anhydride group or an amine group, and wherein at least one of Y or Y' is an acid group, an anhydride group or an amine group.
In one embodiment, the compound is shown in Structure III below:

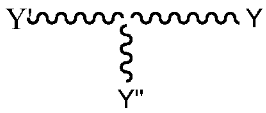

(III),

where the wavy line is a polymer chain, which may or may not be branched; and Y, Y' and Y" are each independently selected from a hydrogen, an acid group, an anhydride group or an amine group, and wherein at least one of Y, Y' or Y" is an acid group, an anhydride group or an amine group.

In one embodiment, the compound is shown in Structure IV below:

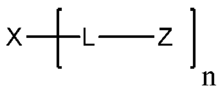

(IV),

where X is any structure; L is a linking group, and Z is a group selected from an acid group, an anhydride group or an amine group.

**Functionalized Olefin-based Polymer C**

The "functionalized olefin-based polymer C," is a polymer comprising the following: (a) a majority weight percent polymerized olefin, such as, for example, monomeric units derived from ethylene or propylene, and where the weight percent is based on the weight of the functionalized polymer, and (b) at least one polymerized comonomer or reacted functionalization agent, each containing at least one functional group.

Functionalized olefin-based polymers include, but are not limited to, functionalized ethylene-based polymers and functionalized propylene-based polymers. Some polar groups that serve as the functionalization moiety include, for example, carboxylic acid (for example, PE-co-AA, PE-co-MAA) maleic anhydride (for example, PE-gr-MAH), and amine.

In one embodiment, the functionalized olefin-based polymer comprises at least one polar group, selected from moieties such as carboxylic acid; anhydride; dicarboxylic acid; or amine. In a further embodiment, the functionalized olefin-based polymer is a functionalized ethylene-based polymer. In another embodiment, the functionalized olefin-based polymer is a functionalized propylene-based polymer.

In one embodiment, the functionalized olefin-based polymer comprises from 0.1 moles/kg to 8 moles/kg, or from 0.1 moles/kg to 5 moles/kg, or from 0.1 moles/kg to 3.5 moles/kg of carboxylic acid functional groups (based on total weight of polymerizable monomers). In a further embodiment, the functionalized olefin-based polymer is a functionalized ethylene-based polymer. In another embodiment, the functionalized olefin-based polymer is a functionalized propylene-based polymer.

The amount of functional group, expressed in moles/kg, is calculated by dividing the weight of the functional group (determined from moles of functional group in the polymer; for example a titration method), per kilo of polymer, by the molecular weight of the functional group.

The amount of functional group can also be calculated by dividing the weight of the polymerized monomeric unit or reacted functionalization agent (or its reaction product such as hydrolysis product), per kilo of polymer, by the molecular weight of the polymerized monomeric unit or reacted functionalization agent (or its reaction product, such as hydrolysis product), followed by multiplying by the number of functional groups per polymerized monomeric unit or reacted functionalization agent (or its reaction product, such as hydrolysis product).

In one embodiment, the functionalized olefin-based polymer comprising units derived from an olefin and an anhydride, and preferably maleic anhydride. In a further embodiment, the functionalized olefin-based polymer is a functionalized ethylene-based polymer. In another embodiment, the functionalized olefin-based polymer is a functionalized propylene-based polymer.

In one embodiment, the functionalized olefin-based polymer has a density from 0.86 to 0.96 g/cc, or from 0.87 to 0.95 g/cc, or from 0.88 to 0.94 g/cc. In a further embodiment, the functionalized olefin-based polymer is a functionalized ethylene-based polymer. In another embodiment, the functionalized olefin-based polymer is a functionalized propylene-based polymer.

In one embodiment, the functionalized olefin-based polymer has a melt index (I2: 2.16kg/190°C) from 0.5 g/10 min to 50 g/10 min, or from 1 g/10 min to 30 g/10 min. In a further embodiment, the functionalized olefin-based polymer is a functionalized ethylene-based polymer.

In one embodiment, the functionalized olefin-based polymer has a melt flow rate (MFR: 2.16kg/230°C) from 0.5 g/10 min to 50 g/10 min, or from 1 g/10 min to 30 g/10 min. In a further embodiment, the functionalized olefin-based polymer is a functionalized propylene-based polymer.

In one embodiment, the functionalized olefin-based polymer is a high pressure, free-radical initiated, highly branched ethylene-based polymer, such as, ethylene-acrylic acid (EAA) copolymers.

In one embodiment, the functionalized olefin-based polymer is a functionalized ethylene-base polymer, selected from the group consisting of polyethylene acrylic acid copolymer, an anhydride grafted polyethylene, ethylene methacrylic acid copolymer, and combinations thereof.

In one embodiment, the functionalized olefin-based polymer is a functionalized ethylene-base polymer, selected from the group consisting of polyethylene acrylic acid copolymer, an anhydride grafted polyethylene, and combinations thereof.

Suitable commercial functional olefin-based polymers include PRIMACOR and AMPLIFY polymers available from The Dow Chemical Company; and other commercial polymers, such as the NUCREL (available from DuPont), BYNEL (available from DuPont).

A functionalized olefin-based polymer may comprise a combination of two or more suitable embodiments as described herein.

A functionalized ethylene-based polymer may comprise a combination of two or more suitable embodiments as described herein.

A functionalized propylene-based polymer may comprise a combination of two or more suitable embodiments as described herein.

**Additives**

In one embodiment, an inventive composition comprises at least one additive. Suitable additives include, but are not limited to, fillers, antioxidants, UV stabilizers, foaming agents, flame retardants, colorants or pigments, anti-blocking agents, slip-agents, and combinations thereof.

Antioxidants include, but are not limited to, hindered phenols; bisphenols; and thiobisphenols; substituted hydroquinones; tris(alkylphenyl)phosphites; dialkylthiodipropionates; phenylnaphthylamines; substituted diphenylamines; dialkyl, alkyl aryl, and diaryl substituted p-phenylene diamines; monomeric and polymeric dihydroquinolines; 2-(4-hydroxy-3,5-t-butylaniline)-4,6-bis(octylthio) 1,3,5 -triazine; hexahydro-1,3,5-tris-β-(3,5-di-t-butyl-4-hydroxyphenyl)propionyl-s-triazine; 2,4,6-tris(n-1,4-dimethylpentylphenylene-diamino)-1,3,5-triazine; and tris-(3,5-di-t-butyl-4-hydroxybenzyl)isocyanurate.

DEFINITIONS

The term "composition," as used herein, includes a mixture of materials which comprise the composition, as well as reaction products and decomposition products formed from the materials of the composition.

The term "polymer," as used herein, refers to a polymeric compound prepared by polymerizing monomers, whether of the same or a different type. The generic term polymer thus embraces the term homopolymer (employed to refer to polymers prepared from only one type of monomer, with the understanding that trace amounts of impurities can be incorporated into the polymer structure), and the term interpolymer as defined hereinafter.

The term "interpolymer," as used herein, refers to polymers prepared by the polymerization of at least two different types of monomers. The generic term interpolymer thus includes copolymers (employed to refer to polymers prepared from two different types of monomers), and polymers prepared from more than two different types of monomers.

The term, "olefin-based polymer," as used herein, refers to a polymer that comprises, in polymerized form, a majority amount of olefin monomer, for example ethylene or propylene (based on the weight of the polymer), and optionally may comprise one or more comonomers.

The term, "ethylene-based polymer," as used herein, refers to a polymer that comprises, in polymerized form, a majority amount of ethylene monomer (based on the weight of the polymer), and optionally may comprise one or more comonomers.

The term, "ethylene/α-olefin interpolymer," as used herein, refers to an interpolymer that comprises, in polymerized form, a majority amount of ethylene monomer (based on the weight of the interpolymer), and at least one α-olefin.

The term, "ethylene/α-olefin copolymer," as used herein, refers to a copolymer that comprises, in polymerized form, a majority amount of ethylene monomer (based on the weight of the copolymer), and an α-olefin, as the only two monomer types.

The term, "propylene-based polymer," as used herein, refers to a polymer that comprises, in polymerized form, a majority amount of propylene monomer (based on the weight of the polymer), and optionally may comprise one or more comonomers.

The term "functional group," as used herein, refers to a chemical substituent containing at least one hetero-atom.

A heteroatom is defined as an atom which is not carbon or hydrogen. Common heteroatoms include, but are not limited to, oxygen, nitrogen, sulfur, phosphorus.
The term "functionalized olefin-based polymer," as used herein, refers to an olefin-based polymer that comprises at least one chemical group (chemical substituent), linked by a covalent bond, comprising at least one hetero-atom. A heteroatom is defined as an atom which is not carbon or hydrogen. Common heteroatoms include, but are not limited to, oxygen, nitrogen, sulfur, phosphorus.
The term "functionalized ethylene-based polymer," as used herein, refers to an ethylene-based polymer that comprises at least one chemical group (chemical substituent), linked by a covalent bond, comprising at least one hetero-atom. A heteroatom is defined as an atom which is not carbon or hydrogen. Common heteroatoms include, but are not limited to, oxygen, nitrogen, sulfur, phosphorus.
The term "functionalized propylene-based polymer," as used herein, refers to a propylene-based polymer that comprises at least one chemical group (chemical substituent), linked by a covalent bond, comprising at least one hetero-atom. A heteroatom is defined as an atom which is not carbon or hydrogen. Common heteroatoms include, but are not limited to, oxygen, nitrogen, sulfur, phosphorus.
The term "polymerized monomeric unit comprising a functional group (for example, copolymerized acrylic acid, and copolymerized maleic anhydride)," as used herein refers to a chemical unit in a (co/inter)polymer that consists of a polymerized functional comonomer, which was used in the polymerization reaction, and which comprises a functional group as defined above. The functional group may have been modified during or after the polymerization reaction (for example: hydrolysis of a maleic anhydride unit to form a dicarboxylic acid).
The term "reacted functionalization agent comprising a functional group (for example, MAH-grafted to polymer, terminal amino group)," as used herein, refers to a chemical unit containing a functional group, as defined above, and which was not part of a polymerized monomeric unit. This includes graft copolymers, for example the succinic anhydride unit of PE-g-MAH, and terminally functionalized (co)polymers such as the terminal amino group of polyoxyalkyleneamine. The functional group may have been modified during or after the functionalization reaction (for example: hydrolysis of a maleic anhydride unit to form a dicarboxylic acid).
The term "perishable material," as used herein, refers to organic matter which can spoil or decay, or which has a decrease in activity of one or more of its active components.
"Isocyanate-containing compound" refers to an organic compound or polymer containing at least one isocyanate group.
"Hydroxyl-containing compound" refers to an organic compound or polymer containing at least one hydroxyl group.
The terms "comprising," "including," "having," and their derivatives, are not intended to exclude the presence of any additional component, step or procedure, whether or not the same is specifically disclosed. In order to avoid any doubt, all compositions claimed through use of the term "comprising" may include any additional additive, adjuvant, or compound, whether polymeric or otherwise, unless stated to the contrary. In contrast, the term, "consisting essentially of' excludes from the scope of any succeeding recitation any other component, step or procedure, excepting those that are not essential to operability. The term "consisting of' excludes any component, step or procedure not specifically delineated or listed.

TEST METHODS

Polymer density is measured in accordance with ASTM D-792-08.

*Melt Index*

Melt index (12) of an ethylene-based polymer is measured in accordance with ASTM D-1238-10, condition 190°C/2.16 kg. Melt index (15) of an ethylene-based polymer is measured in accordance with ASTM D-1238-10, condition 190°C/5.0 kg. Melt index (110) of an ethylene-based polymer is measured in accordance with ASTM D-1238-10, condition 190°C/10.0 kg. High load melt index (121) of an ethylene-based polymer is measured in accordance with ASTM D-1238-10, condition 190°C/21.0 kg. For propylene-based polymers, the melt flow rate (MFR) is measured in accordance with ASTM D-1238-10, condition 230°C/2.16 kg.

***Gel Permeation Chromatography (GPC)***

Conventional GPC measurements can be used to determine the weight-average (Mw) and number-average (Mn) molecular weight of the polymers and functional polymers (compounds), as described herein, and to determine the MWD (= Mw/Mn). Samples were analyzed with a high-temperature GPC instrument (Polymer Laboratories, Inc. model PL220).
The method employs the well-known universal calibration method based on the concept of hydrodynamic

volume, and the calibration is performed using narrow polystyrene (PS) standards along with 4 mixed A 20μm columns (PLgel Mixed A from Agilent (formerly Polymer Laboratory Inc.)) operating at a system temperature of 140C. Samples are prepared at a "2 mg/mL" concentration in 1,2,4-trichlorobenzene solvent. The flow rate is 1.0 mL/min, and the injection size is 100 microliters.

The molecular weight determination is deduced by using narrow molecular weight distribution polystyrene standards (from Polymer Laboratories), in conjunction with their elution volumes. The equivalent polyethylene molecular weights are determined by using appropriate Mark-Houwink coefficients for polyethylene and polystyrene (as described by Williams and Ward in Journal of Polymer Science, Polymer Letters, Vol. 6, (621) 1968) to derive the following equation:

$$\text{Mpolyethylene} = a * (\text{Mpolystyrene})^b.$$

In this equation, a = 0.4316 and b = 1.0. Weight average molecular weight (Mw) and number average molecular weight (Mn) are calculated in the usual manners. For example, Mw is calculated (using a computer program, for example, Viscotek TriSEC software version 3.0) according to the following formula: Mw = $\sum$ wi x Mi, where wi and Mi are the weight fraction and molecular weight, respectively, of the ith fraction eluting from the GPC column. If needed, samples can be silylated or esterified prior to GPC analysis. A suitable silylation procedure is described in the "Williams and Ward" reference.

EXPERIMENTAL

Some of the polymers used in the film structures of this study are shown in Table 1. One or more stabilizers, anti-blocking agents, and/or slip agents are typically added to each polymer at ppm levels.

Table 1: Polymers Used for Film Fabrication

| Materials | Density (g/cc) | MI (g/10min) |
|---|---|---|
| DOWLEX 2056G | 0.919-0.921 | 0.95-1.05 |
| AFFINITY PL1881G* | 0.901-0.906 | 0.75-1.25 |
| DOWLEX 5056.01G** | 0.919-0.923 | 0.9-1.20 |
| DOW LDPE 310E | 0.922-0.925 | 0.65-0.85 |
| DOW LDPE 312E | 0.922-0.925 | 0.65-0.85 |
| LDPE 1 | 0.918-0.922 | 0.52-0.78 |
| INSPIRE 114 | 0.900 | 0.35-0.65 |

*Ethylene/octene copolymer
**Ethylene/octene copolymer
MI (Melt Index; 12) PE = 190°C / 2.16kg
MI (Melt Index; 12) PP = 230°C / 2.16kg

Other materials used for film fabrication are shown in Table 2.

Table 2: Other Materials Used for Film Fabrication

| Materials | Source | Structure / Composition | Density |
|---|---|---|---|
| Hostaphan RNK (PET) thickness ~ 12 μm | Mitsubishi | Polyethylene terephthalate | 0.971-0.921 |
| Soft Lamination Grade Al foil thickness ~ 12 μm | AMCOR (Alcan) | aluminum foil | 0.9235 |
| AB MB (Antiblock Masterbatch) | | 80 wt% Polyolefin with a density of about 0.90 g/cc | |
| | | 20 silica ($SiO_2$) | |

(continued)

| Materials | Source | Structure / Composition | Density |
|---|---|---|---|
| ELASTAMINE RP-405 | Huntsman | Difunctional primary amine (Mn approx. 440 g/ mole) Calculated 4.55 moles amine per kg compound | Not Applicable (NA) |

PRIMACOR 3440 = ethylene /acrylic acid copolymer available from Dow Chemical. Mn = 14,500; Mw = 75,000 (GPC). Acrylic acid content = 9.7 weight %. Calculated moles functional group per kilo = 1.35 moles COOH/kg polymer.
AC-575P = ethylene/maleic anhydride copolymer available from Honeywell; density of 0.92 g/cc (ASTM D-505), viscosity (Brookfield) at 140°C of 4200 cps, saponification number of 35 mg KOH/g (357-OR-1). Bound saponification number = 33 mg KOH/g. Calculated maleic anhydride content = 2.9 weight %. Calculated moles of functional group per kilo = 0.294.
BHX-10088 = Maleic anhydride terminated polypropylene, acid number = 40 mgKOH/g. Calculated maleic anhydride content = 3.5 weight %. Calculated moles of functional group per kilo = 0.356.
Amine-t-PP = A secondary aliphatic amine functional polypropylene resin. Reaction product of BHX-10088 and 3-methylamino(propylamine). Calculated moles of functional group per kilo = 0.356; Mn = 2,500 g/mole.
AMPACET 10063 = anti-blocking agent from Ampacet.

*Synthesis of Maleic Anhydride Terminated Polypropylene/Amine "Amine-t-PP"*

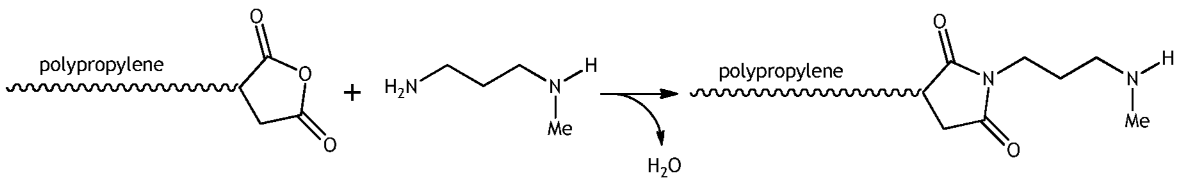

To a 1 liter, three-neck, round bottom flask, equipped with overhead stirring, Dean-Stark trap, and nitrogen inlet, was added 450 mL xylene (Aldrich #294780) and 250g Baker Hughes BHX-10088 (maleic anhydride terminated polypropylene). The contents were heated, and stirred under light nitrogen flow, until all solids were in solution, and then the temperature and flow were increased to "azeotrope off' at least 20 mL of liquid, to remove water, and drive the material to the anhydride form. The reaction temperature was reduced to 90°C, and then three equivalents (25 g) of N-methyl-1,3-propanediamine (Aldrich #127027) was added to the flask. The reaction was allowed to run for at least one hour, then the temperature was increased to 120°C, and the reaction was allowed to proceed for several hours. The reaction solution was sampled by FTIR to confirm completeness of the reaction, and the product was isolated by precipitation into stirred, excess methanol in a large plastic beaker. Solids were allowed to settle out, liquid decanted off, then more methanol was added with stirring. Again, after settling, the liquid was decanted off, and the remaining slurry filtered using a Buchner/aspirator/filter paper set up. The solids were transferred to a pan lined with a thin TEFLON sheet, and dried in a 50°C oven, under vacuum, overnight. A small sample of dried material was dissolved in hot toluene, and analyzed by FTIR again to characterize the final product. Conversion of anhydride to imide was confirmed by monitoring the carbonyl stretching frequency in FTIR (anhydride ~1790 cm-1 → imide ~1710 cm-1).
Polyurethane adhesives (laminating adhesives) are shown in Table 3.

Table 3: Laminating Adhesives

| Adhesive | Source | Details |
|---|---|---|
| MORFREE 698A + C79 | DOW | Solvent-less two-component polyurethane adhesive system |
| ADCOTE L719 + CR719C | DOW | Two-component, solvent-based polyurethane adhesive |
| ADCOTE 811A + Catalyst 9L10 | DOW | Solvent-based two-component polyurethane adhesive system, based on aliphatic isocyanates |

**Study I**

**Method for Preparing Compounded Material**

The compounded materials for film fabrication are shown in Table 4.

Table 4: Compounded Materials

| | |
|---|---|
| ConcElast | 90 wt% DOWLEX 5056G + 10 wt% ELASTAMINE RP-405 |
| ConcElastRet | 90 wt% INSPIRE D114 + 10 wt% ELASTAMINE RP-405 |

The ConcElast was produced by compounding 90 wt% of DOWLEX 5056G with 10 wt% of ELASTAMINE RP-405 on a Buss Kneader Compounder MDK/E46. The temperatures in the three zones of the equipment were 110, 185 and 200°C, respectively. The overall output was 5 kg/hr.

The ConcElastRet was produced by compounding 90 wt% of INSPIRE 114 with 10 wt% of ELASTAMINE RP-405 on a Buss Kneader Compounder MDK/E46. The temperatures in the three zones of the equipment were 110, 220 and 250°C, respectively. The overall output was 5 kg/hr.

**Layered Films**

Three layered film structures are shown in Tables 5A and 5B. All percentages are weight percentages based on the weight of the composition used to form the film layer. The components used to form each film layer were dry blended before extrusion. The film fabrication process is discussed below.

Table 5A: Polyethylene Based Multi-layer Film Structures (wt%)

| | 10 μm | 30 μm | 10 μm |
|---|---|---|---|
| Name | Sealant Layer | Core layer | Inside layer |
| PE-Ref 1 | P11881G + 20% LD312 | 80% 5056.01G + 20% LD312 | 79.5% 5056.01G + 20%LD310 + 0.5% AB MB |
| PE-Iso 1 | P11881G + 20% LD312 | 80% 5056.01G + 20% LD312 | 40% ConcElast (417469) + 39.5% 5056.01G + 20%LD310 + 0.5% AB MB |

Table 5B: Polypropylene Based Multi-layer Film Structures (wt%)

| Name | 10 μm | 30 μm | 10 μm |
|---|---|---|---|
| | Sealant Layer | Core layer | Inside layer |
| PP-Ref 1 (PP control) | INSPIRE 114 | INSPIRE 114 | INSPIRE 114+0.5% AB MB |
| PP-Iso 1 | INSPIRE 114 | INSPIRE 114 | 40% ConcElastRet + 59.5% INSPIRE 114 + 0.5% AB MB |

**Film Fabrication**

Films were fabricated on a three layer ALPINE coextrusion blown film line. The line was equipped with two 50 mm extruders (of 30 D length) and a core extruder of 65 mm (also of 30 D length). The line was equipped with a tandem winder, and a corona treatment device. The die diameter was 200 mm, with a typical die gap of 1.5 mm. The extruder and die heating temperatures are shown in Table 6. The individual extruder conditions (layer thickness, rpm, motor load, melt temperature and pressure) are shown in Table 7. The extruders were operated at a total output of 80 kg/hr, and the take off speed was 17.7 m/min, to achieve a total thickness of 50 μm (micron). The films were corona treated to 40 dyne/cm.

The thickness of each layer was primarily determined by the ratio of the throughputs of the different extruders. For example, if a total film thickness is 90 μm (micron), and the three extruders have equal outputs, then each layer will be 30 μm (micron). The total film thickness was measured on line using an KUNDIG K-300 ECO profiler sensor (based on the capacitance measuring principle for non-conductive materials).

Table 6: Extruder and Die Heating Temperatures

| | Temperature °C |
|---|---|
| Extruder A | 200 - 240 |
| Extruder B | 200 - 235 |
| Extruder C | 195 - 225 |
| Die | 235 |

Table 7: Extrusion Parameters

| | | |
|---|---|---|
| Extruder A | Screw Speed | 25.4 rpm |
| | Melt Temperature | 229°C |
| Extruder B | Screw Speed | 29.9 rpm |
| | Melt Temperature | 232°C |
| | Melt Pressure | 21.7 MPa (217 bar) |
| Extruder C | Screw Speed | 25.2 rpm |
| | Melt Temperature | 213°C |
| | Melt Pressure | 19 MPa (190 bar) |

**Preparation of Pre-laminates [PET-PU1-Al]**

The polyurethane adhesive (PU1; see below) was prepared by combining the polyisocyanate component with the polyol component. Immediately after combining the polyisocyanate component with the polyol component, the adhesive blend (at ambient temperature) was then fed onto the lamination gravure rollers of a Nordmeccanica pilot laminator. The mixed adhesive was then applied to an "in line" corona treated primary web (PET), at a coverage of 3 to 4 g/$m^2$, (or 1 to 1.2 lbs) per ream. The coated web was dried, in the drying section of the laminator, to evaporate the solvent to a residual solvent content of less than 10 mg/$m^2$. Next, the adhesive coated primary web was mated to secondary web (Al) to form a pre-laminated film, and then this pre-laminated film was nipped at 60°C, and wound on the finish roll on the Nordmeccanica pilot laminator. The pre-laminates were kept for final curing at 45°C for seven days.

**Preparation of Laminates [Multi-layered film structure (Sealant-Core-Inside)-PU2-(Al-PU1-PET)]**

A pre-laminate, as discussed above, was laminated onto a multilayered film structure (see Tables 5A and 5B) using a polyurethane adhesive (PU2), to form a laminate. The primary substrate was a "PET-Alu" pre-laminate," as discussed above, and the secondary substrate was a multilayered film as noted in Tables 5A and 5B.

When a solvent-less polyurethane was used as the adhesive (PU2; see below), this adhesive was used immediately after combining the polyisocyanate component with the polyol component. The adhesive (at ambient temperature) was then fed onto the roll coater of the Nordmeccanica pilot laminator (metered rolls set at 40°C to 45°C). The mixed adhesive was then applied to the "in line" corona treated primary web (pre-laminate) at the coverage of 1.6 to 2.2 grams per square meter, (or 1 to 1.2 lbs) per ream. Next, the adhesive coated primary web was mated to the secondary web (multilayered film structure), which had also been "in line" corona treated, to form a laminated film. This laminated film was nipped and wound on the finish roll on the Nordmeccanica pilot laminator. The laminates were stored at room temperature.

When a solvent-based polyurethane was used as the adhesive (PU2; see below), this adhesive was used immediately after combining the polyisocyanate component with the polyol component. The adhesive blend (at ambient temperature) was then fed onto the gravure rollers of the Nordmeccanica pilot laminator. The mixed adhesive was then applied to an "in line" corona treated primary web (pre-laminate) at the coverage of 3 to 4g/$m^2$, (or 1 to 1.2 lbs) per ream. The coated web was dried in the drying section of the laminator to evaporate the solvent to a residual solvent content less than 10 mg/$m^2$. Next, the adhesive coated primary web was mated to the secondary web (multilayered film structure), which had also been "in line" corona treated to form a laminated film. This laminated film was nipped at 60°C, and wound

on the finish roll on the Nordmeccanica pilot laminator. The adhesive lamination conditions are shown in Table 8. The laminates were stored at room temperature. A schematic of a final laminate structure is shown in Figure 2.

Table 8: Adhesive Lamination Conditions

| | Details | Adhesive Used | Thickness of adhesive used - final film | Lamination Conditions |
|---|---|---|---|---|
| Pre-laminate | PET (12 μm (micron)) + Al (12 μm (micron)) | Solvent Based ADCOTE 811A + Catalyst 9L10 (PU1) | 3.5 g/m$^2$ | Speed: 50 m/min Tunnel Temp: 80°C / 80°C/ 80°C in 3 sections Laminating temp 60°C |
| Experimental Laminates | Pre-laminate + PE Based Experimental Films (see Table 2) | Solvent-less MORFREE 698A + C79 (PU2) | 2.1 g/m$^2$ | Machine speed: 50 m/min Adhesive temperature: 40°C; Laminating temperature: 45°C; |
| | Pre-laminate + PP Based Experimental Films (see Table 2) | Solvent Based ADCOTE L719 + CR719C (PU2) | 3 g/m$^2$ | Machine speed: 30m/min; Tunnel temperature: 80°C / 80°C / 80°C; Laminating temperature: 60°C |

**Preparation of Laminate for Bond Data**

After the laminates were stored at room temperature for the periods of time shown in Tables 9 and 10, two "15 mm" wide strips were cut from the finished roll of laminate, and bond data for each strip was generated on INSTRON tensile tester, using a separation speed of "100 mm/minute."

Tensile peel tests were performed using ASTM D1876 (ASTM International, West Conshohocken, PA, USA). The separation speed was 100 mm/min, and sample width was 15 mm. Bond data reported is the average of two specimens tested (standard equipment INSTRON. The PET/A1 pre-laminate was held in the upper jaw (fixed jaw) and the experimental films in the lower jaw (moving jaw). The results were reported as "N/ 15 mm of force required to peel the laminate apart." The results are shown in Tables 9 and 10. Failure modes are abbreviated as noted below.
Failure Mode Abbreviations:

KoK: cohesive failure in adhesive,

KPE: adhesive on PE,

KPE/Alu: adhesive on PE and Alu,

ta: adhesive remains tacky,

l.ta: adhesive remains slightly tacky, and

str: stretch of film.

Table 9: Bond Strength data for Acid Functional PE-Based Experimental Films

| No. | Adhesive Used For Lamination | Primary Web | Secondary (Experimental Films) | Bond Strength [N/ 15mm] 2nd Day |
|---|---|---|---|---|
| 1 | MOR-FREE 698A + C79 Mix ratio 100 : 50 Coat Weight: 2 g/m$^2$ | Pre-structure PET-Alu | PE-Ref 1 + Corona (Film Control) | 6.3 KPE str |
| 2 | | Pre-structure PET-Alu | PE - Iso 1 + Corona | 1.3 Kalu |

Table 10: Bond Strength data for Acid Functional PP-Based Experimental Films

| No. | Product | Primary Web | Secondary Web (Experimental Films - Spain) | Bond Strength [N/ 15mm] 10th Day |
|---|---|---|---|---|
| 3 | ADCOTE L719 + CR 719C4 100 : 2.5 Coat Weight: 3.6 g/m$^2$ | Pre-structure PET-Alu | PP - Ref 1 + Corona (Film Control) | 11.7 Kalu |
| 4 | | Pre-structure PET-Alu | PP - Iso 1 + Corona | 10.0 Kalu |

For the PE-based films, the bond strength was measured after two days, and the corresponding failure modes were noted. Adequate bond strength was maintained for the inventive films # 2 - "PE-Iso1."

For the PP-based films, the bond strength was measured after ten days and the corresponding failure modes were noted. Adequate bond strength was maintained for the inventive films # 4 - "PP-Iso 1."

**Pouch Preparation and PAA Level Measurement**

The level of primary aromatic amines (PAAs), for example MDA (methylene diphenyl diamine) and TDA (toluene diamine / methylphenylene diamine), in a food-simulant, were analyzed by diazotization of the PAAs, so that the concentration of PAAs could be determined colorimetrically. The aromatic amines existing in the test solution were diazotized in a chloride solution, and subsequently coupled with N-(1-naphthyl)-ethylene diamine dihydrochloride, giving a violet solution. An enrichment of the color is done with a fixed phase extraction column. The amount of the PAAs is determined photometrically at a wavelength of 550 nm. The concentration of PAAs is noted as "aniline hydrochloride equivalents," and reported as "micrograms of aniline hydrochloride per 100 ml (or 50 ml) of food-simulant per an area of 4 dm$^2$ of interior surface of pouch (sealant layer)."

Laminates were prepared as described above. Each pouch was formed by cutting a strip of about "28 cm x 16.3 cm," from the middle section (width) of the laminate. Each strip was folded to form a "14 cm x 16.3 cm" surface area, and heat sealing an edge of about "1 cm" along each open longitudinal edge of the folded strip was heat sealed, to form a pouch of "14 cm x 14.3 cm," excluding the heat sealed edges (see Figure 3). The film structure of a pouch wall, from interior layer to exterior layer, was as follows: Interior: multi-layered film structure (Sealant-Core-Inside)- PU2 -(Al-PU1-PET):Exterior. The equipment used for heat sealing the edges was a Brugger HSG-C. Sealing conditions for PE-based laminates were 0.13 MPa (1.3 bar), 130°C. Sealing conditions for laminates were 0.15 MPa (1.5 bar), 160°C.

Four pouches (two blanks and two test pouches), each with an inner surface area of about "14.0 cm x 14.3 cm" were used for each inventive film in this study (see Figure 4). For PE-based pouches, each pouch was formed after two days from the time of formation of the respective laminate. For the PP-based pouches, each pouch was formed after two and three days from the formation of the respective laminate. Two test pouches for each day, and two blank pouches per day, were prepared from each laminate. Prior to forming a pouch, the laminate was stored at room temperature under ambient atmosphere.

Each pouch was filled with "100 ml" of 3% aqueous acetic acid (= the food-simulant). These pouches were stored at 70°C, in an air circulation oven, for two hours. After cooling the test solution (contents of the pouch) to room temperature, "100 ml" of test solution was mixed with "12.5 ml" of hydrochloric acid solution (IN) and "2.5 ml" of sodium nitrite solution (0.5 g per 100 ml of solution), and the contents were allowed to react for ten minutes. Ammonium sulfamate (5 ml; 2.5 g per 100 ml of aq. solution) was added, and allowed to react for ten minutes. A coupling reagent (5 ml; 1 g of N-(1-naphtyl)-ethylenediamine dihydrochloride per 100 g of aq. solution) was added, and allowed to react for 120 minutes. After each addition, the resulting mixture was stirred with a glass rod. For the "blank pouches," "100 ml" of the test solution was mixed with the derivation reagents as discussed above, except for the sodium nitrite.

The solution was concentrated by elution through an ODS solid phase extraction column (ODS reverse phase, C18 endcapped), and the extinction was measured at 550 nm, using a Spectrophotometer Lambda (from Perkin Elmer).

The column was conditioned using, first, "12 ml" of methanol, then "12 ml" elution solvent, and then "12 ml" aqueous hydrochloric acid solution (0.1 N). Each derivatized sample was added to the column using a glass beaker that was previously rinsed twice with 3 ml of aqueous hydrochloric acid solution (0.1 N). The column was subject to a vacuum (about 2.5 mm Hg) pull, to remove all rinse, for one minute. Then "5 ml" of elution solvent was added to the column, and this step was repeated until "10 ml" of eluent was collected. The extinction (absorption) of the eluent was measured in

a "4 cm cuvette" at 550 nm.

To determine the concentration of PAA, the extinction of the reaction product was measured at 550 nm, in a 4 cm cuvette, against the reagent blank solution and a series of standards with known concentrations of aniline hydrochloride, which were processed in parallel. Results are shown in Tables 11 and 12.

Table 11: Primary Aromatic Amine (PAA) Decay Data - PE-Based Experimental Laminates

| No. | Adhesive Used For Lamination | Primary Web | Secondary Web (Experimental Films) | Primary Aromatic Amine (PAA) 2nd Day |
|---|---|---|---|---|
| 1 | MOR-FREE 698A + C79 Mix ratio 100 : 50 Coat Weight: 2 $g/m^2$ | Pre-structure PET-Alu | PE-Ref 1 + Corona (Film Control) | 7.97 $\mu g$/50ml |
| 2 | | Pre-structure PET-Alu | PE - Iso 1 + Corona | 1.55 $\mu g$/50ml |

Table 12: PAA Decay Data - PP-Based Experimental Laminates

| No. | Adhesive Product Used | Primary Web | Secondary Web (Experimental Films - Spain) | 2nd Day | 3rd Day |
|---|---|---|---|---|---|
| 3 | ADCOTE L719 + CR 719C4 100 : 2.5 Coat Weight: 3.6 $g/m^2$ | Pre-structure PET-Alu | PP - Ref 1 + Corona (Film Control) | 30.9 $\mu g$/ 50ml | 24.4 $\mu g$/ 50ml |
| 4 | | Pre-structure PET-Alu | PP - Iso 1 + Corona | 0.24 $\mu g$/ 100ml | not detectable |

For the PE-based structures, the PAA level in the food simulant was measured after two days. The inventive structure # 2 showed better PAA reduction after two days compared to the reference structure 1.

For the PP-based structures, the PAA level in the food simulant was measured as a function of time (2nd and 3rd day). The inventive structure # 4 (viz. PP-Iso 1) showed better PAA reduction when compared to the reference structure 3, and showed no PAA in the simulant after two days.

**Study II Additional Films**

Compounding was done in advance to make the blends of the functional resins in DOWLEX / LDPE formulations. The samples were compounded using a Werner & Pfleiderer 30 mm twin-screw extruder, a nine barrel, 28:1 L/D machine. The drive had a 15 HP motor with a maximum screw speed of 500 RPM. The extruder had six temperature control zones, including the die, and was water cooled at the feed throat and air cooled for barrels 2-9. The die was a 2-hole "3.2 mm" standard die. The water-bath was 3.2 m (10.5ft) long, with Huestis pillow-block strand dryers on the end. The pelletizer was a Conair-Jetro model 304. The extruder was fed using a "loss-in-weight," Accurate flex-wall single screw feeders, with an 8000 controller. The extruder barrel temperatures were set as shown in Table 13.

Once the barrel temperature reached steady state, the extruder was turned on, and the screw speed was ramped up gradually, and fixed at about 300 - 350 revolutions per minute. The pellet blends were dry blended in a plastic bag, according to the weight percent in the Table 15, and the mixed pellets were fed into the 30 mm extruder throat by the Accurate loss-in-weight feeder. The feed rate of a loss-in-weight feeder was set to the desired rate (kg/h) ((lb/h)). Once the pellets were extruded, two strands forming at the die exit were cooled in a water bath. Strand pelletizing was used for sampling during the compounding.

Table 13. Temperature set-points for compounding

| Temperature set-points | 70% DOWLEX 2056G + 20% LDPE + 10% AC-575P | 90% INSPIRE 114 + 10% BHX-10088* | 90% INSPIRE 114 + 10% amine-t-PP |
|---|---|---|---|
| Zone #1 | 160 | 160 | 160 |

(continued)

| Temperature set-points | 70% DOWLEX 2056G + 20% LDPE + 10% AC-575P | 90% INSPIRE 114 + 10% BHX-10088* | 90% INSPIRE 114 + 10% amine-t-PP |
|---|---|---|---|
| Zone #2 | 225 | 225 | 225 |
| Zone #3 | 230 | 230 | 230 |
| Zone #4 | 230 | 230 | 230 |
| Zone #5 | 230 | 230 | 230 |
| Die temp | 230 | 230 | 230 |
| * Mn = 1850 g/mole, Mw = 3880 g/mole (GPC). | | | |

For the blends containing the non-functional resins, the resins were dry-blended in the ratios shown in Table 15 shortly before film fabrication.

**Film Fabrication**

Films were fabricated on a five layer LAB TECH coextrusion blown film line. The line was equipped with two, "25 mm" extruders for the skins, and three core extruders of "20 mm" (all of 30 D length). The line was equipped with a dual surface winder, with slitting capability, but no corona treatment device. The die diameter was 75 mm, with a typical die gap of 2.0 mm. The extruder heating temperature for each of Extruders A-E ranged from 190°C-200°C, and die heating temperature was 235°C. The individual extruder conditions (rpm and melt temperature) are shown in Table 14. The extruders were operated at a total output of 34 #/hr, and the take off speed was 7.3 m/min (24 ft/min), to achieve a total thickness of 50 μm (micron).

These sample films were a three layer (20/60/20) structure. Based on the die design and a request for 20% skins, the layer ratio used for each extruder was 20/18/25/18/20. Slit-width = 30.5 cm (12 inches). Total film thickness = 50 μm (microns). Each individual layer was 10 μm (microns) thick.

Table 14: Extrusion Parameters

| | | |
|---|---|---|
| Extruder A | Screw Speed | 55 rpm |
| | Melt Temperature | 212° C |
| Extruder B | Screw Speed | 118 rpm |
| | Melt Temperature | 218° C |
| Extruder C | Screw Speed | 145 rpm |
| | Melt Temperature | 213° C |
| Extruder D | Screw Speed | 126 rpm |
| | Melt Temperature | 213° C |
| Extruder E | Screw Speed | 57 rpm |
| | Melt Temperature | 220° C |

Table 15: Additional Films (wt%)

| Number | Layer 1 (sealant) | Layer 2 | Layer 3 | Layer 4 | Layer 5 |
|---|---|---|---|---|---|
| 1 | 80% AFFINITY PL1881G + 20% LDPE | 80% DOWLEX 2056G + 20% LDPE | 80% DOWLEX 2056G + 20% LDPE | 80% DOWLEX 2056G + 20% LDPE | 80% DOWLEX 2056G + 20% LDPE + 0.5% Ampacet 10063 |
| 2 | INSPIRE 114 | INSPIRE 114 | INSPIRE 114 | INSPIRE 114 | INSPIRE 114 |

(continued)

| Number | Layer 1 (sealant) | Layer 2 | Layer 3 | Layer 4 | Layer 5 |
|---|---|---|---|---|---|
| 3 | 80% AFFINITY PL1881G + 20% LDPE | 70% DOWLEX 2056G + 20% LDPE + 10% PRIMACOR 3440 | 70% DOWLEX 2056G + 20% LDPE + 10% PRIMACOR 3440 | 70% DOWLEX 2056G + 20% LDPE + 10% PRIMACOR 3440 | 80% DOWLEX 2056G + 20% LDPE + 0.5% AMPACET 10063 |
| 4 | 80% AFFINITY PL1881G + 20% LDPE | 70% DOWLEX 2056G + 20% LDPE + 10% AC-575P | 70% DOWLEX 2056G + 20% LDPE + 10% AC-575P | 70% DOWLEX 2056G + 20% LDPE + 10% AC-575P | 80% DOWLEX 2056G + 20% LDPE + 0.5% AMPACET 10063 |
| 5 | INSPIRE 114 | 90% INSPIRE 114 + 10% BHX-10088 | 90% INSPIRE 114 + 10% BHX-10088 | 90% INSPIRE 114 + 10% BHX-10088 | INSPIRE 114 |
| 6 | INSPIRE 114 | 90% INSPIRE 114 + 10% amine-t-PP | 90% INSPIRE 114 + 10% amine-t-PP | 90% INSPIRE 114 + 10% amine-t-PP | INSPIRE 114 |

Total moles of functional groups per square meter of film:

Film # 3 = 0.00404 moles /$m^2$,

Film # 4 = 0.000882 moles /$m^2$,

Film # 5 = 0.00107 moles /$m^2$.

Film # 6 = 0.00107 moles / $m^2$.

Pouch preparation and measurement of PAA levels are discussed above. Results are shown in Tables 16 and 17.

Table 16: Results 1

| | ppb aniline equivalents / $6dm^2$ / kg | | |
|---|---|---|---|
| Number of days after Lamination | Film # 1 (Comparison) | Film # 3 (Comparison) | Film # 4 (Inventive) |
| 1 | 28.90 | 15.51 | 14.99 |
| 2 | 15.19 | 3.48 | 3.28 |

Table 17: Results 2

| | ppb aniline equivalents / $6dm^2$ / kg | | |
|---|---|---|---|
| Number of days after Lamination | Film # 2 (Comparison) | Film # 5 (Inventive) | Film # 6 (Inventive) |
| 2 | 6.1 | 0.18 | 0.3 |
| 3 | 3.7 | 0.1 | 0.27 |
| 7 | 1 | 0.22 | 0.22 |

As seen in Table 16, Film #4 performs comparably to Film # 3, despite containing 4.6 times less functional groups per square meter of film, showing the advantage of the low molecular weight functional resin. As seen in Table 17, Films #5 and #6 outperform (less "ppb aniline equivalents") Film #2.

## Claims

1. An article comprising a layered structure comprising at least two layers:

   A) a first layer A formed from a composition A comprising a polyurethane;
   B) a second layer B formed from a composition B comprising at least one compound selected from the group consisting of the following compounds:

      a) a compound 1 comprising at least one acid group,
      b) a compound 2 comprising at least one anhydride group,
      c) a compound 3 comprising at least one primary amine group and/or at least one secondary amine group, and
      d) a combination thereof; and
      wherein the compound has a molecular weight or number average molecular weight, each less than 10,000 g/mole and wherein the article further comprises a perishable material.

2. The article of Claim 1, wherein composition B comprises from 1 to 30 weight percent of the compound, based on the weight of composition B.

3. The article of Claim 1 or Claim 2, wherein the amount of compound, in second layer B, is from 1 to 10 weight percent, based on the weight of the second layer B.

4. The article according to any of the previous claims, wherein the compound comprises less than, or equal to, 5.0 moles/kg of the functional moiety, based on the weight of the compound.

5. The article according to any of the previous claims, wherein the compound comprises at least one group selected from $-C0_2H$, $-SO_3H$, $-PO_3H_2$, aromatic hydroxyl, or a combination thereof.

6. The article according to any of Claims 1-4, wherein the compound comprises an anhydride group.

7. The article according to any Claims 1-4, wherein the compound comprises a primary amine, a secondary amine group, or a combination thereof.

8. The article according to any of the previous claims, wherein composition B further comprises an olefin-based polymer B.

9. The article according to any of the previous claims, wherein the composition B further comprises a LDPE.

10. The article of any of the previous claims, wherein the structure further comprises a third Layer C formed from a composition C comprising a functionalized olefin-based polymer C, comprising at least one polymerized monomeric unit, or at least one reacted functionalization agent, each comprising a functional group selected from the group consisting of the following: an acid group, an anhydride group, a primary amine group, a secondary amine group, a hydroxyl group, and combinations thereof.

11. The article of Claim 1, wherein the second layer B is adjacent to the perishable material.

12. The article of Claim 1, wherein the second layer B is adjacent to another layer, which is adjacent to the perishable material.

13. The article of any of the previous claims, wherein the second layer B is adjacent to the first layer A.

## Patentansprüche

1. Ein Artikel, beinhaltend eine Schichtstruktur, die mindestens zwei Schichten beinhaltet:

   A) eine erste Schicht A, gebildet aus einer Zusammensetzung A, die ein Polyurethan beinhaltet;
   B) eine zweite Schicht B, gebildet aus einer Zusammensetzung B, die mindestens eine Verbindung beinhaltet,

die aus der Gruppe ausgewählt ist, die aus den folgenden Verbindungen besteht:

a) einer Verbindung 1, beinhaltend mindestens eine Säuregruppe,
b) einer Verbindung 2, beinhaltend mindestens eine Anhydridgruppe,
c) einer Verbindung 3, beinhaltend mindestens eine primäre Amingruppe und/oder mindestens eine sekundäre Amingruppe, und
d) einer Kombination davon; und

wobei die Verbindung eine Molekülmasse oder zahlenmittlere Molekülmasse von jeweils weniger als 10 000 g/Mol aufweist und wobei der Artikel ferner ein verderbliches Material beinhaltet.

**2.** Artikel gemäß Anspruch 1, wobei Zusammensetzung B bezogen auf das Gewicht von Zusammensetzung B zu 1 bis 30 Gewichtsprozent die Verbindung beinhaltet.

**3.** Artikel gemäß Anspruch 1 oder Anspruch 2, wobei die Menge an Verbindung in der zweiten Schicht B bezogen auf das Gewicht der zweiten Schicht B 1 bis 10 Gewichtsprozent beträgt.

**4.** Artikel gemäß einem der vorhergehenden Ansprüche, wobei die Verbindung bezogen auf das Gewicht der Verbindung weniger als oder gleich 5,0 Mol/kg des funktionellen Anteils beinhaltet.

**5.** Artikel gemäß einem der vorhergehenden Ansprüche, wobei die Verbindung mindestens eine Gruppe, ausgewählt aus $-CO_2H$, $-SO_3H$, $-PO_3H_2$, aromatischem Hydroxyl oder einer Kombination davon, beinhaltet.

**6.** Artikel gemäß einem der Ansprüche 1-4, wobei die Verbindung eine Anhydridgruppe beinhaltet.

**7.** Artikel gemäß einem der Ansprüche 1-4, wobei die Verbindung ein primäres Amin, eine sekundäre Amingruppe oder eine Kombination davon beinhaltet.

**8.** Artikel gemäß einem der vorhergehenden Ansprüche, wobei Zusammensetzung B ferner ein Polymer B auf Olefinbasis beinhaltet.

**9.** Artikel gemäß einem der vorhergehenden Ansprüche, wobei die Zusammensetzung B ferner ein LDPE beinhaltet.

**10.** Artikel gemäß einem der vorhergehenden Ansprüche, wobei die Struktur ferner eine dritte Schicht C beinhaltet, gebildet aus einer Zusammensetzung C, die ein funktionalisiertes Polymer C auf Olefinbasis beinhaltet, das mindestens eine polymerisierte Monomereinheit oder mindestens ein umgesetztes Funktionalisierungsmittel beinhaltet, die jeweils eine funktionelle Gruppe beinhalten, die aus der Gruppe ausgewählt ist, die aus den folgenden besteht: einer Säuregruppe, einer Anhydridgruppe, einer primären Amingruppe, einer sekundären Amingruppe, einer Hydroxylgruppe und Kombinationen davon.

**11.** Artikel gemäß Anspruch 1, wobei die zweite Schicht B dem verderblichen Material benachbart ist.

**12.** Artikel gemäß Anspruch 1, wobei die zweite Schicht B einer anderen Schicht benachbart ist, die dem verderblichen Material benachbart ist.

**13.** Artikel gemäß einem der vorhergehenden Ansprüche, wobei die zweite Schicht B der ersten Schicht A benachbart ist.

## Revendications

**1.** Un article comprenant une structure en couches comprenant au moins deux couches :

A) une première couche A formée à partir d'une composition A comprenant un polyuréthane ;
B) une deuxième couche B formée à partir d'une composition B comprenant au moins un composé sélectionné dans le groupe constitué des composés suivants :

a) un composé 1 comprenant au moins un groupe acide,
b) un composé 2 comprenant au moins un groupe anhydride,

c) un composé 3 comprenant au moins un groupe amine primaire et/ou au moins un groupe amine secondaire, et
d) une combinaison de ceux-ci ; et

dans lequel le composé a une masse moléculaire ou une masse moléculaire moyenne en nombre, chacune inférieure à 10 000 g/mole et l'article comprenant en outre un matériau périssable.

**2.** L'article de la revendication 1, dans lequel la composition B comprend de 1 à 30 pour cent en poids du composé, rapporté au poids de la composition B.

**3.** L'article de la revendication 1 ou de la revendication 2, dans lequel la quantité de composé, dans la deuxième couche B, va de 1 à 10 pour cent en poids, rapporté au poids de la deuxième couche B.

**4.** L'article selon n'importe lesquelles des revendications précédentes, dans lequel le composé comprend un nombre inférieur à, ou égal à, 5,0 moles/kg du groupement fonctionnel, rapporté au poids du composé.

**5.** L'article selon n'importe lesquelles des revendications précédentes, dans lequel le composé comprend au moins un groupe sélectionné parmi $-CO_2H$, $-SO_3H$, $-PO_3H_2$, un hydroxyle aromatique, ou une combinaison de ceux-ci.

**6.** L'article selon n'importe lesquelles des revendications 1 à 4, dans lequel le composé comprend un groupe anhydride.

**7.** L'article selon n'importe lesquelles des revendications 1 à 4, dans lequel le composé comprend une amine primaire, un groupe amine secondaire, ou une combinaison de ceux-ci.

**8.** L'article selon n'importe lesquelles des revendications précédentes, dans lequel la composition B comprend en outre un polymère B à base d'oléfines.

**9.** L'article selon n'importe lesquelles des revendications précédentes, dans lequel la composition B comprend en outre un PEBD.

**10.** L'article de n'importe lesquelles des revendications précédentes, dans lequel la structure comprend en outre une troisième couche C formée à partir d'une composition C comprenant un polymère C fonctionnalisé à base d'oléfines, comprenant au moins une unité monomère polymérisée, ou au moins un agent de fonctionnalisation ayant réagi, comprenant chacun un groupe fonctionnel sélectionné dans le groupe constitué de ce qui suit : un groupe acide, un groupe anhydride, un groupe amine primaire, un groupe amine secondaire, un groupe hydroxyle, et des combinaisons de ceux-ci.

**11.** L'article de la revendication 1, où la deuxième couche B est adjacente au matériau périssable.

**12.** L'article de la revendication 1, où la deuxième couche B est adjacente à une autre couche, laquelle est adjacente au matériau périssable.

**13.** L'article de n'importe lesquelles des revendications précédentes, dans lequel la deuxième couche B est adjacente à la première couche A.

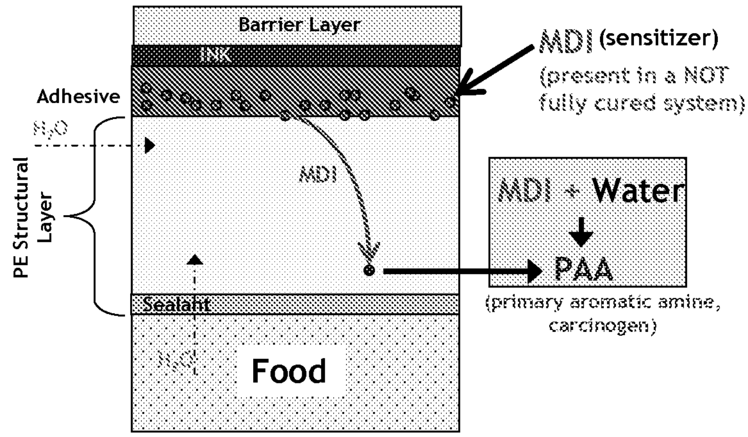


FIGURE 1

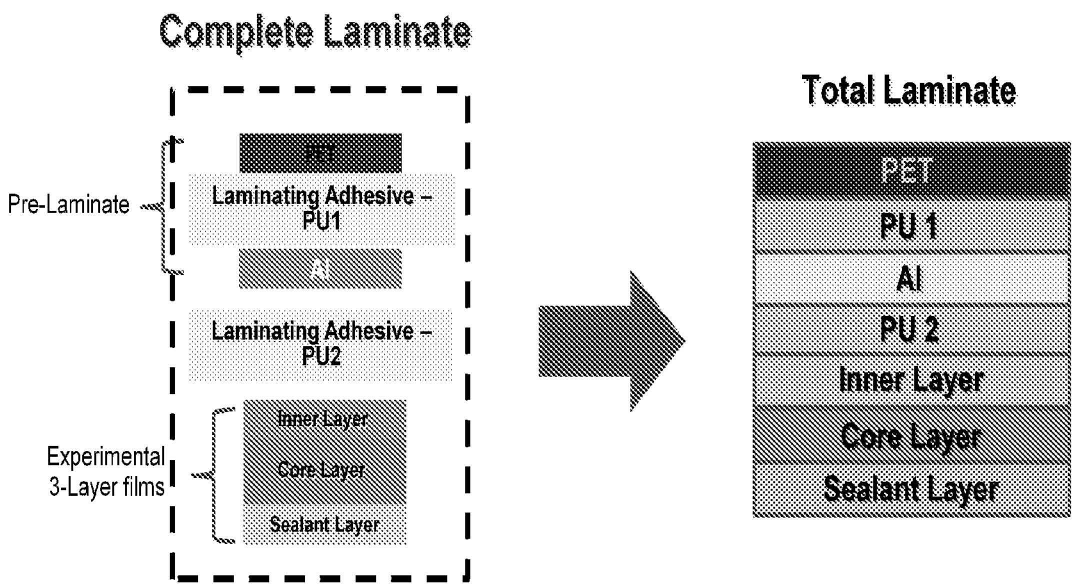


FIGURE 2

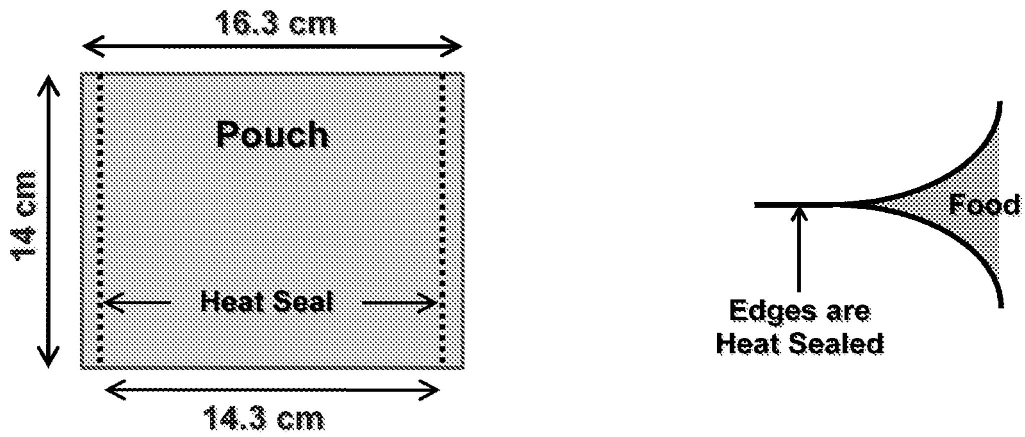


FIGURE 3

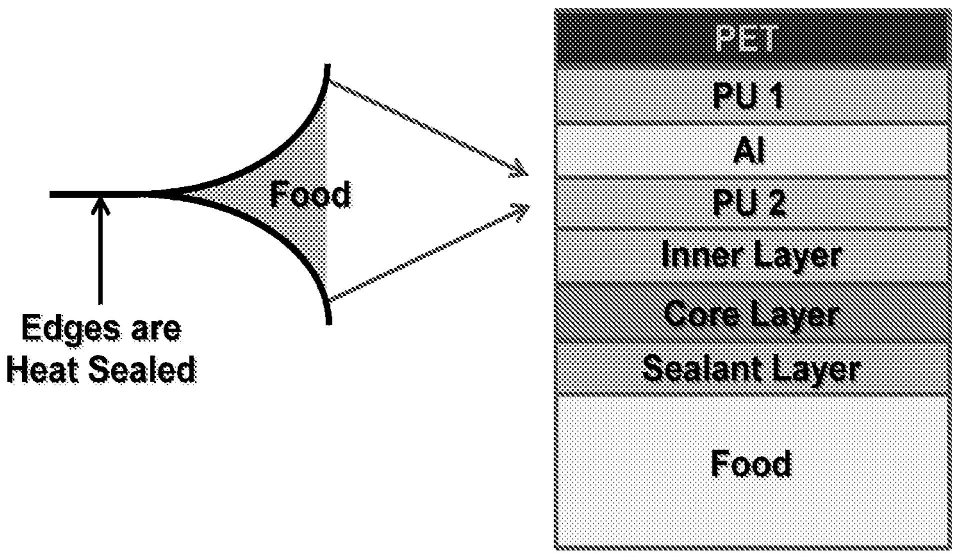


FIGURE 4

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2010264677 A
- JP 2006021530 A
- WO 2008079784 A
- WO 2008080111 A
- US 20100093942 A
- JP 2002316396 A
- JP 03918404 B
- JP 2001152127 A
- JP 04496564 B
- JP 04407144 B
- JP 03959967 B
- JP 2000167973 A
- JP 2009142997 A
- JP 03780741 B
- JP 11000978 A
- JP 3086539 A
- JP 2011016232 A
- JP 2010036413 A
- JP 04402414 B
- US 20040116643 A
- US 20020103284 A
- US 20100010156 A
- US 7101624 B
- US 7097890 B
- US 7241481 B
- US 7368171 B
- US 7071280 B
- US 6607831 B
- US 5654061 A
- US 5047272 A
- WO 0216221 A
- WO 9703821 A
- EP 1559746 A1


### Non-patent literature cited in the description


- **WILLIAMS ; WARD.** *Journal of Polymer Science, Polymer Letters,* 1968, vol. 6 (621